# FASCICULE DE BREVET EUROPEEN

(11) **EP 1 229 245 B1**
(45) Date de publication et mention de la délivrance du brevet: **07.01.2009**
(21) Numéro de dépôt: 02290207.6
(22) Date de dépôt: 30.01.2002
(51) Int. Cl.: F04B 53/08

(54) **Dispositif d'échange pour un circuit fermé**
Austauschvorrichtung für einen geschlossenen Kreislauf
Exchange device for a closed circuit

(30) Priorité: 31.01.2001 FR 0101286
(43) Date de publication de la demande: 07.08.2002
(73) Titulaire: POCLAIN HYDRAULICS INDUSTRIE, 60411 Verberie (FR)
(72) Inventeur: Bigo, Louis, 60200 Compiegne (FR); Fontaine, Jacques, 60350 Vieux-Moulin (FR); Mangano, Alain, 60350 Vieux Moulin (FR)
(74) Mandataire: Intes, Didier Gérard André

(56) Documents cités:
- DE-C- 19 522 448
- GB-A- 883 129
- US-A- 2 904 066
- US-A- 3 811 458
- US-A- 3 925 987
- US-A- 4 759 261

## Description

La présente invention concerne un dispositif d'échange pour un circuit fermé comprenant au moins un moteur hydraulique ayant un carter qui définit un espace intérieur dans lequel est disposé un bloc-cylindres, et au moins deux conduites principales, qui sont reliées à la pompe et qui constituent respectivement une conduite principale d'alimentation et une conduite principale d'échappement pour le moteur, le dispositif d'échange comprenant un sélecteur d'échange apte à mettre la conduite principale qui est à la plus basse pression en communication avec une soupape qui, elle-même, communique avec un réservoir sans pression un tel dispositif est connu du document US-A-4 759 261.

Dans ces dispositifs connus, le sélecteur permet de prélever du fluide sur celle des conduites qui est à la plus basse pression, pour diriger ce fluide vers un réservoir sans pression en vue de sa réfrigération, avant sa réinjection dans le circuit d'alimentation du moteur hydraulique. Il est connu d'utiliser un sélecteur d'échange et une soupape constitués par deux éléments distincts, disposés l'un à la suite de l'autre sur le circuit d'échange. Par exemple, ces deux éléments sont fixés sur le carter du moteur, ou sont intégrés dans ce dernier. C'est cette disposition que montre le document DE-195 22 448.

Des dispositifs de ce type ne donnent pas entière satisfaction, car leur mise en place dans le moteur est relativement complexe. De plus, un dispositif donné est adapté à un moteur spécialement prévu à cet effet, c'est-à-dire comportant le logement pour, d'une part, le sélecteur d'échange et, d'autre part, la soupape.

L'invention vise donc à proposer un dispositif d'échange qui puisse facilement être mis en place dans le circuit d'échange, en particulier en étant directement fixé sur le carter du moteur hydraulique, qui puisse s'adapter simplement à différents moteurs d'une même gamme de moteurs sans que, pour passer d'un dispositif d'échange présentant des caractéristiques données à un autre dispositif d'échange analogue mais ayant d'autres caractéristiques, il faille spécialement adapter la conformation du moteur.

Par ailleurs, la société demanderesse a constaté qu'il peut être inopportun de prélever du fluide sur le circuit d'alimentation du moteur hydraulique en vue de réaliser l'échange dans certaines conditions de fonctionnement de ce moteur. C'est par exemple le cas dans une situation de démarrage du moteur, dans laquelle la pression est faible et dans laquelle un prélèvement de fluide retarderait la montée en puissance.

L'invention vise donc également à proposer un dispositif d'échange qui évite le prélèvement de fluide en vue de réaliser l'échange dans certaines conditions de fonctionnement du moteur.

Ce but est atteint grâce au fait que le sélecteur d'échange et la soupape sont réunis dans une même valve d'échange ayant une entrée apte à être reliée à la conduite principale qui est à la plus basse pression et une sortie qui communique en permanence avec le réservoir sans pression, la soupape étant apte à faire communiquer ladite entrée avec ladite sortie lorsque la pression dans ladite conduite principale qui est à la plus basse pression atteint un seuil de pression donné.

La valve d'échange de l'invention se présente donc sous la forme d'un composant hydraulique qui peut être facilement mis en place dans le circuit, en particulier en étant rapporté sur le carter du moteur, de manière à ce que son entrée puisse communiquer avec la conduite principale qui est à la plus basse pression. Pour éviter que le fluide d'échange ne soit prélevé lorsque la pression dans le circuit n'est pas suffisante, la soupape ne s'ouvre qu'à partir du seuil de pression. Cette soupape est disposée entre l'entrée et la sortie de la valve d'échange, qu'elle fait seulement communiquer lorsque la pression dans la conduite principale qui est à la plus basse pression est suffisante, de sorte que la sortie de cette valve d'échange peut, quant à elle, être en permanence en communication avec l'enceinte dans laquelle est injecté le fluide destiné à être refroidi.

La valve d'échange constitue un composant hydraulique manipulable comme une cartouche formant un tout.

Ainsi, pour adapter le mode d'échange aux conditions valables pour un circuit considéré, il suffit de modifier ou de changer cette cartouche, sans intervenir sur les autres composants hydrauliques du circuit.

Avantageusement, la valve d'échange comprend, en outre, une restriction apte à être interposée entre l'entrée et la sortie de ladite valve, lorsque celles-ci sont reliées par la soupape.

L'ensemble formé par la soupape et cette restriction constitue un régulateur du débit de fluide prélevé par le dispositif d'échange. Ainsi, le débit de fluide prélevé est nul jusqu'à ce que la pression dans la conduite principale à la plus basse pression atteigne le seuil de pression. Il augmente ensuite jusqu'à atteindre un débit limite, limité par la section de passage de la restriction. Lors de cette phase d'augmentation du débit, la réfrigération du circuit est progressivement favorisée en conséquence.

Avantageusement, la sortie de la valve d'échange est raccordée au réservoir sans pression par l'intermédiaire de l'espace intérieur du moteur.

Dans ce cas, le fluide prélevé pour l'échange sert à assurer un balayage de l'espace intérieur du carter du moteur. Le fluide prélevé par la valve d'échange est en effet injecté dans ce carter, tandis que le fluide présent dans le carter du moteur en est évacué par l'orifice habituel de retour de fuites. La limitation du débit de balayage par la section de passage de la restriction a pour avantage d'éviter de créer une surpression, non souhaitable, dans le carter du moteur.

De préférence, lorsque la valve d'échange sert également à assurer ce balayage, elle constitue une cartouche qui est directement fixée sur le carter du moteur. Ainsi, à partir d'un « corps de moteur » standard, on peut, en changeant seulement la cartouche formant cette valve d'échange, choisir le mode d'échange et de balayage le mieux adapté à l'application envisagée.

On peut par exemple concevoir une gamme de moteurs ayant en commun le fait que leurs carters présentent tous un alésage apte à recevoir une telle valve, mais se différenciant les uns des autres par des paramètres tels que cylindrée maximale, couple maximal, nombre de cylindrées actives de fonctionnement.... Alors, la valve d'échange selon l'invention peut être indifféremment mise en place sur tous les moteurs de cette gamme, dans l'alésage prévu à cet effet. S'il est nécessaire d'utiliser des valves d'échange ayant des paramètres de fonctionnement différents (en particulier du point de vue du tarage de la soupape) pour des moteurs différents de la même gamme, alors aucune modification des moteurs n'est nécessaire, mais il suffit d'adapter la valve sans la modifier extérieurement (en particulier en modifiant la conformation de la soupape et/ou le tarage de ses moyens de rappel) pour que les paramètres de fonctionnement souhaités soient obtenus.

Selon un mode de réalisation avantageux, la valve d'échange comprend un corps de valve et un tiroir d'échange, le corps de valve ayant deux voies d'entrée respectivement raccordées en permanence à chacune des deux conduites principales et une voie de sortie qui communique avec le réservoir sans pression, le tiroir d'échange étant monté coulissant dans le corps de valve en étant commandé par la pression de fluide auxdites voies d'entrée à l'encontre de moyens de rappel du tiroir entre une position neutre dans laquelle il isole ces voies d'entrée et de sortie, et deux positions d'échange dans lesquelles la première ou la deuxième voie d'entrée, celle qui est reliée à la conduite principale à la plus basse pression, est apte à communiquer avec la voie de sortie par des moyens de communication ; ladite valve d'échange comporte, en outre, des moyens pour, dans les positions d'échange, obturer lesdits moyens de communication tant que la pression de fluide à la voie d'entrée qui est reliée à la conduite principale à la plus basse pression n'a pas atteint un seuil de pression donné.

Ce tiroir d'échange, qui est commandé par la différence de pression entre les deux conduites principales, est un moyen simple pour relier la sortie de valve à celle de ces deux conduites qui est à la plus basse pression. C'est par une obturation des moyens de communication entre l'entrée et la sortie, à l'intérieur de cette valve, que la soupape permet d'éviter le prélèvement de fluide en vue de l'échange tant que la pression n'a pas atteint le seuil de pression donné.

Avantageusement, la soupape présente un premier seuil de pression à partir duquel ladite soupape fait communiquer l'entrée et la sortie de la valve d'échange lorsque ladite entrée est reliée à la première conduite principale et un deuxième seuil de pression, différent du premier, à partir duquel ladite soupape fait communiquer l'entrée et la sortie de la valve d'échange lorsque ladite entrée est reliée à la deuxième conduite principale.

La valve d'échange selon cette variante adaptée à un circuit comprenant un moteur réversible pour lequel, selon leur raccordement respectif à la pompe, les deux conduites principales peuvent servir soit à l'alimentation, soit à l'échappement. Le fait que la soupape présente deux seuils de pression différents permet d'adapter l'échange aux conditions de fonctionnement du moteur, selon son sens de fonctionnement. En particulier, le moteur peut avoir un sens préférentiel de fonctionnement qui est lié à un paramètre de fonctionnement qui lui est intrinsèque, tel que son rendement, qui est meilleur dans un sens que dans l'autre. Il peut en outre par exemple s'agir d'un moteur ayant deux cylindrées de fonctionnement, du type décrit dans les demandes de brevet FR-A-2588616 et FR-A-2 780 850. Dans un tel moteur, en petite cylindrée, les conduits de distribution ne contribuant pas au couple moteur sont raccordés à l'échappement dans le sens préférentiel de fonctionnement et sont raccordés à l'alimentation dans le sens non préférentiel dans lequel ils opposent un couple résistant au couple moteur.

Avantageusement, la valve d'échange comprend une première restriction apte à être interposée entre l'entrée et la sortie de la valve lorsque ladite entrée est reliée à la première conduite principale et une deuxième restriction apte à être interposée entre l'entrée et la sortie de la valve lorsque ladite entrée est reliée à la deuxième conduite principale.

Dans ce cas, c'est le débit de fluide prélevé qui est différent selon le sens de fonctionnement du moteur.

L'invention sera bien comprise et ses avantages apparaîtront mieux à la lecture de la description détaillée qui suit, de modes de réalisation représentés à titre d'exemples non limitatifs. La description se réfère aux dessins annexés sur lesquels :
- la figure 1 montre schématiquement un circuit d'entraînement d'un moteur hydraulique comprenant un dispositif d'échange ;
- la figue 2 montre, en coupe longitudinale, une valve d'échange conforme à l'invention selon un premier mode de réalisation, le tiroir d'échange étant représenté dans sa position neutre ;
- la figure 3 montre la valve de la figure 2, le tiroir d'échange étant dans une position permettant le prélèvement de fluide ;
- la figure 4 illustre schématiquement le fonctionnement de cette valve d'échange ;
- la figure 5 est une vue analogue à la figure 1, mais pour un autre mode de réalisation de la valve d'échange ;
- la figure 5A est un détail montrant une variante de la figure 5 ; et
- la figure 6 illustre schématiquement le fonctionnement de la valve de la figure 5.

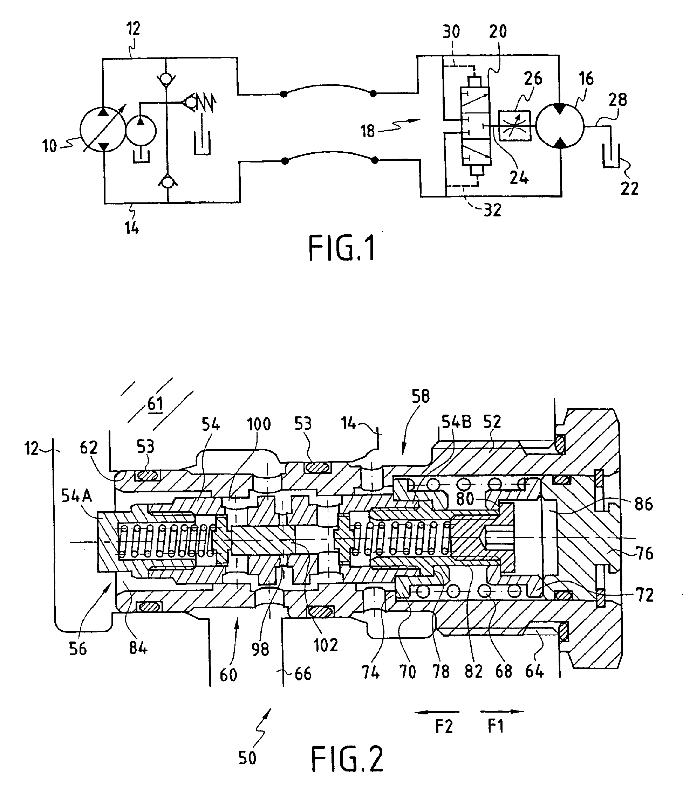

La figure 1 montre un circuit fermé dont la pompe principale 10 a ses orifices respectivement raccordés à deux conduites principales, respectivement 12 et 14 qui servent respectivement de conduites d'alimentation et d'échappement pour un moteur hydraulique 16 auquel elles sont reliées.

Dans ce circuit, un circuit d'échange 18 comprend un sélecteur d'échange 20 qui a deux voies d'entrée respectivement reliées à chacune des deux conduites principales 12 et 14 et une voie de sortie qui, par une conduite d'évacuation, évacue le fluide prélevé par le sélecteur 20 vers un réservoir sans pression 22. Plus précisément, la conduite d'évacuation comprend un tronçon de raccordement 24 qui est disposé entre la sortie du sélecteur 20 et un orifice qui débouche à l'intérieur du carter du moteur 16. Sur ce tronçon est disposée une soupape 26 munie d'une restriction et formant ainsi un régulateur de débit. Ainsi, dans des conditions de fonctionnement données, le fluide prélevé par le sélecteur 20 est injecté dans le carter du moteur. Dans ce carter s'effectue un balayage et le fluide s'évacue par une conduite de retour de fuites 28 qui constitue un tronçon terminal de la conduite d'évacuation. Par des moyens de commande 30 et 32, la valve 20 est commandée, à partir de sa position neutre dans laquelle elle est représentée sur la figure 1, dans l'une ou l'autre de ses positions d'échange dans lesquelles elle raccorde la conduite 14 ou la conduite 12 (celle qui est à la plus basse pression) à la conduite 24.

Selon l'invention, le sélecteur 20 et la soupape 26 sont rassemblés en une seule et même valve, dénommée valve d'échange.

Le moteur 16 n'est pas représenté en détail, mais il s'agit par exemple d'un moteur à piston radiaux du même type que celui décrit dans FR-A-2 780 450.

La valve d'échange peut être raccordée au réservoir sans pression 22 soit directement, pour servir seulement à l'échange, soit par l'intermédiaire de l'espace intérieur du moteur, pour servir également au balayage dudit espace comme c'est le cas pour le sélecteur 20 et la soupape 26 de la figure 1.

En référence aux figures 2 à 4, on décrit maintenant la valve d'échange conforme à l'invention, selon un premier mode de réalisation. Cette valve d'échange 50 comprend un corps de valve 52 et un tiroir d'échange 54 mobile axialement à l'intérieur du corps. Le corps de valve présente deux voies d'entrée, respectivement 56 et 58, respectivement raccordées en permanence aux conduites principales 12 et 14. Il présente également une voie de sortie 60 qui communique avec le réservoir sans pression 22 par une conduite 66 avantageusement reliée à l'espace intérieur du carter du moteur 16. Le corps de valve contient, outre le tiroir 54, les divers éléments constitutifs de la valve d'échange. Ainsi, cette valve d'échange forme une cartouche qui est mise en place comme un tout dans un logement prévu à cet effet, ménagé dans le carter du moteur. Cette valve constitue donc un seul ensemble devant être intégré au moteur, d'où il résulte une simplicité de montage et un gain d'encombrement. De plus, la valve d'échange constitue une unité fonctionnelle qui peut être testée en dehors du moteur, avant montage dans ce dernier.

Le logement de cette valve est par exemple constitué par un trou borgne 62 pratiqué dans une pièce 61 formant une partie du carter du moteur, ce trou s'ouvrant sur l'extérieur pour permettre l'introduction du corps de valve et présentant des moyens de fixation de ce dernier, par exemple constitués par un filetage 64. Dans ce trou débouchent les conduites principales 12 et 14 et la conduite 66.

Le composant hydraulique constitué par la valve est donc facilement accessible et peut être facilement démonté en cas de nécessité.

Comme on le verra dans la suite, la valve d'échange comporte divers éléments, tels que des ressorts qui déterminent ses paramètres d'utilisation. La valve d'échange conforme à l'invention peut être réalisée selon une gamme de valves différentes, qui se distinguent les unes des autres par des paramètres tels que la raideur ou le tarage de ces ressorts. Ces valves peuvent toutes avoir un corps de valve similaire, ce qui permet de monter indifféremment l'une ou l'autre de ces valves dans des parties de carter de moteur analogues, présentant un logement 62 approprié, pour très facilement adapter le mode de balayage des moteurs à l'application envisagée.

Par ailleurs, au cas où l'un des éléments constituant la valve serait endommagé, par exemple en cas de rupture d'un ressort, le fait que la valve se présente sous la forme d'un composant hydraulique unique permet de faciliter les réparations et de limiter les risques que les débris des éléments endommagés ne s'échappent dans le circuit hydraulique auquel est raccordé le moteur.

Il faut encore noter que la valve présente des usinages précis, qu'il est beaucoup plus facile de réaliser sur de petites pièces telles que le corps de valve ou le tiroir, que sur des pièces plus grandes telles que le carter d'un moteur hydraulique. En effet, les orifices du carter qui sont raccordés à la valve pour former ses entrées 56 et 58 et sa sortie 60 n'ont pas besoin d'être calibrés, d'où il résulte une économie substantielle.

Le déplacement du tiroir 54 de la valve de la figure 2 est commandé par la pression de fluide aux voies d'entrée 56 et 58, à l'encontre de moyens de rappel. La figure 2 montre ce tiroir dans sa position neutre, dans laquelle les voies d'entrée 56 et 58 et la voie de sortie 60 sont isolées les unes des autres. Il est rappelé en permanence dans cette position neutre par un ressort de rappel 68 dont chaque extrémité coopère avec une coupelle, respectivement 70 et 72. Le ressort tend à écarter ces coupelles l'une de l'autre en les amenant en butée contre, respectivement, un épaulement 74 formé sur la périphérie interne du corps de valve 52 et un bouchon 76 situé à l'extrémité de ce corps opposé audit épaulement.

Les positions extrêmes des coupelles 70 et 72 par rapport au tiroir 54 sont elles-mêmes définies par leurs venues en butée respectives contre des épaulements 78 et 80 de ce tiroir. En l'espèce, ces épaulements 78 et 80 sont formés sur une pièce en forme de tige 82 qui est fixée au tiroir par vissage.

On comprend que, à partir de la position neutre représentée sur la figure 2, le tiroir 54 peut se déplacer vers la droite, dans la direction de la flèche F1, auquel cas la coupelle 70 est entraînée par l'épaulement 78 pour se déplacer vers le bouchon 76 et comprimer le ressort 68. A cette occasion, la coupelle 72 reste immobile et le tiroir coulisse par rapport à elle. Le tiroir peut se déplacer vers la gauche de la figure, dans le sens F2, auquel cas la coupelle 72 est entraînée par l'épaulement 80 de manière à comprimer le ressort, alors que la coupelle 70 reste fixe.

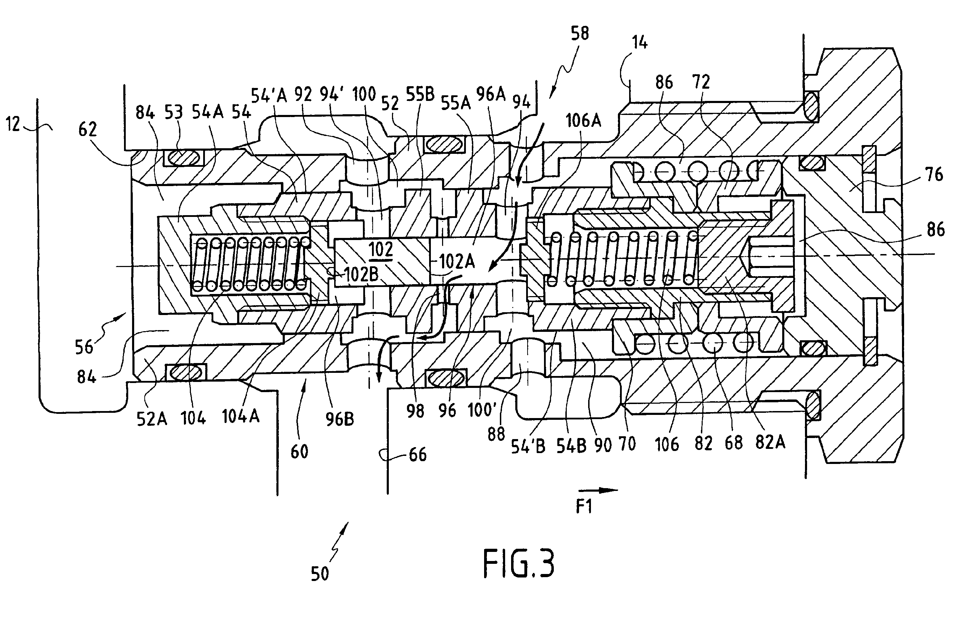

La figure 3 montre précisément le tiroir dans une position d'échange, dans laquelle il s'est déplacé dans le sens de la flèche F1, selon sa course maximum, limitée par la butée de la coupelle 70 contre la coupelle 72. Ce déplacement a été commandé par la pression de fluide dans la conduite 12. En effet, la valve 50 comporte une première chambre de commande 84 qui communique en permanence avec la première voie d'entrée 56, elle-même en communication avec la conduite principale 12. En l'espèce, cette chambre est simplement ménagée à l'extrémité 54A du tiroir qui se trouve dans l'extrémité ouverte 52A du corps 52 définissant la première voie d'entrée 56.

La valve 50 comprend en outre une deuxième chambre de commande 86 qui communique en permanence avec la deuxième voie d'entrée 58 du corps de valve 52. Cette deuxième chambre se trouve du côté de l'autre extrémité 54B du tiroir, de sorte que les deux chambres sont ménagées de part et d'autre de ce dernier.

La communication permanente de la chambre 86 avec la deuxième voie d'entrée 58 est assurée par un canal de communication comprenant un ou plusieurs orifices 88 pratiqués dans le corps 52, dans la région de la deuxième voie 58 et un passage axial 90, qui est ménagé entre la périphérie externe du tiroir 54 et la périphérie interne du corps de valve et qui relie la chambre 86 à ce ou ces orifices. Il faut noter que les coupelles 70 et 72 sont des coupelles fendues, à travers lequel le fluide peut circuler.

Lorsque les contraintes exercées sur l'extrémité 54A du tiroir par la pression dans la chambre 84 deviennent supérieures aux contraintes exercées sur l'autre extrémité du tiroir par la somme de la pression dans la chambre 86 et des efforts résistants opposés par le ressort 68, alors le tiroir peut occuper sa position d'échange de la figure 3. Lorsque les contraintes exercées sur l'extrémité 54B du tiroir par la pression de la chambre 86 deviennent supérieures à la somme de celles qui sont exercées par la pression de la chambre 84 et par le ressort 68, alors le tiroir se déplace dans l'autre sens.

Dans la position de la figure 3, la voie d'entrée 58 qui est reliée à la conduite 14 à la basse pression, communique avec la voie de sortie 60 par des moyens de communication qui comprennent le ou les orifices 88 précités, un ou plusieurs orifices ménagés dans le tiroir, et un ou plusieurs orifices 92 ménagés dans le corps 52, dans la région de la voie de sortie 60. La voie d'entrée 56 est isolée des voies 58 et 60 par le contact entre une partie 54'A de la périphérie externe du tiroir 54 et la périphérie interne du corps 52 entre les voies 56 et 60.

En l'espèce, le tiroir se présente sous la forme d'un corps creux globalement cylindrique, qui présente un ou plusieurs orifices 94 aptes, dans sa première position d'échange représentée sur la figure 3, à faire communiquer le ou les orifices 88 avec son espace interne 96. Il présente également un ou plusieurs orifices 98 qui, dans la même position, font communiquer ledit espace interne 96 avec un espace annulaire 100 ménagé entre la périphérie externe du tiroir et la périphérie interne du corps 52, espace avec lequel communiquent le ou les perçages 92. Ces moyens de communication présentent avantageusement une restriction qui, en l'espèce, est constituée par le ou les perçages 98 qui sont calibrés.

Le tiroir 54 coopère avec un piston 102 qui est mobile par rapport à lui entre une position neutre dans laquelle il obture les moyens de communication et au moins une position de communication dans laquelle il ouvre ces moyens de communication. En l'espèce, ce piston 102 est disposé dans l'espace interne 96 du tiroir.

Sur la figure 2, le piston 102 est représenté dans une position neutre, dans laquelle il obture les perçages 98, tandis que, sur la figure 3, il est déplacé vers la gauche de manière à libérer lesdits perçages. Dans cette position, et lorsque le tiroir 54 est dans sa première position d'échange représentée sur la figure 3, le piston permet la communication entre l'espace intérieur 96 du tiroir et la voie de sortie 60 de la valve. Si, dans la position d'échange du tiroir représentée sur la figure 3, le piston 102 avait la même position que sur la figure 2, alors les moyens de communication seraient obturés et le fluide d'échange ne serait pas prélevé.

Le piston 102 est commandé entre ses différentes positions par des moyens de commande comprenant une chambre de commande de piston, qui est en l'espèce formée dans l'espace intérieur 96 du tiroir et qui, lorsque le tiroir est dans une position d'échange, est reliée à la conduite principale à la plus basse pression.

On voit en effet que sur la figure 3, l'espace intérieur 96 est relié à la conduite principale 14, par l'intermédiaire des perçages 88 et 94. Le piston 102 est rappelé en permanence par des moyens de rappel dans sa position dans laquelle il obture les moyens de communication. En l'espèce, le tiroir 54 coopère avec deux ressorts de rappel, respectivement 104 et 106, qui sont situés de part et d'autre du piston 102. Le ressort 104 est retenu dans le tiroir par un bouchon rapporté à l'extrémité 54A de ce dernier, tandis que le ressort 106 est maintenu dans le tiroir par la pièce en forme de tige 82 précédemment évoquée, cette pièce étant elle-même pourvue d'un bouchon 82A.

Dans sa position neutre, les mouvements du piston 102 sont limités de part et d'autre par la coopération de ses extrémités avec, respectivement, le ressort 104 et le ressort 106. On comprend que, lorsque le tiroir occupe sa position d'échange de la figure 3, il faut que la pression dans la conduite 14, et donc à l'entrée 58, soit suffisante pour que la pression dans l'espace intérieur 96 du tiroir soit elle-même suffisante pour exercer sur le piston 102 des contraintes supérieures à celles qu'exerce le ressort 104.

Dans l'exemple des figures 2 et 3, le piston 102 est apte à occuper une première et une deuxième position de communication, dans lesquelles il est respectivement commandé par alimentation en fluide d'une première chambre de commande de piston à l'encontre de premiers moyens de rappel de piston constitués par le ressort 104, et par alimentation en fluide d'une deuxième chambre de commande de piston à l'encontre de deuxièmes moyens de rappel de piston constitués par le ressort 106. La première chambre de commande 96A est ménagée, dans l'espace intérieur 96 du tiroir, entre l'extrémité 102A du piston et la tête 106A du ressort 106 qui lui fait face. La deuxième chambre de commande de piston 96B est ménagée entre l'extrémité 102B du piston et la tête 104A du ressort 104 qui lui fait face.

Des perçages 94 du tiroir 54 sont raccordés en permanence à la première chambre de commande 96A, qu'ils mettent en communication avec l'espace annulaire 100' ménagé entre la périphérie externe du tiroir et la périphérie interne du corps 52, dans la région des perçages 88. Le tiroir présente d'autres perçages 94', qui sont analogues aux perçages 94 mais qui sont raccordés en permanence à la deuxième chambre de commande 96B, qu'ils mettent en communication avec l'espace annulaire 100. Les perçages 98 qui forment la restriction calibrée sont disposés entre les perçages 94 et 94'.

Dans la première position du piston 102 visible sur la figure 3, celui-ci obture les perçages 94' et la communication entre les espaces annulaires 100 et 100' est empêchée par le contact entre une partie saillante 55A de la périphérie du tiroir 54 et la périphérie interne du corps 52 entre les voies 58 et 60. Le fluide s'écoule donc entre la deuxième voie d'entrée 58 et la voie de sortie 60 de la valve par la restriction formée par les perçages 98. Lorsque, à partir de sa position neutre de la figure 2, le tiroir 54 passe dans sa première positon d'échange représentée sur la figure 3, le piston 102 reste tout d'abord dans sa positon neutre, fermant ainsi la soupape qu'il constitue avec les perçages 98. Lorsque la pression à la voie d'entrée 58 atteint la valeur seuil déterminée par le ressort 104, alors le piston 102 occupe sa première position et ouvre ladite soupape pour permettre l'échange.

Lorsque, à partir de sa position neutre, le tiroir 54 passe dans sa deuxième position d'échange (non représentée), il fait communiquer l'espace annulaire 100 avec la voie d'entrée 56, tout en isolant les espaces 100 et 100' par le contact entre sa zone saillante 55B et la périphérie interne du corps 52, entre les voies 56 et 60 ; en même temps, la voie d'entrée 58 est isolée des voies 56 et 60 par le contact entre une partie 54'B de la périphérie externe du tiroir 54 et la périphérie interne du corps 52 entre les voies 58 et 60. Dans un premier temps, le piston 102 occupe sa position neutre en obturant les perçages 98. Lorsque la pression à la voie d'entrée 56 atteint la valeur seuil déterminée par le ressort 106, alors le piston peut comprimer ce ressort et occuper sa deuxième position en permettant la communication entre l'espace 100 (relié à la voie 56) et la voie 60. Le fluide d'échange est alors prélevé par l'intermédiaire de la restriction formée par les perçages 98.

Le piston 102 constitue donc une soupape qui n'ouvre les moyens de communication entre la voie d'entrée 56 ou 58 qui est à la plus basse pression et la voie de sortie 60 que lorsque la pression à ladite voie d'entrée est suffisante pour que les contraintes qu'elle exerce sur ce piston surmontent l'effort résistant opposé par le ressort 104 ou 106.

Les perçages 94, 98 et 94' sont formés dans des gorges ménagées sur la périphérie externe du tiroir entre, respectivement, les parties saillantes 54'B et 55A, les parties saillantes 55A et 55B et les parties saillantes 55B et 54'A.

Dans le mode de réalisation représenté, les têtes de piston 104A et 106A viennent respectivement en butée, lorsque les ressorts 104 et 106 sont détendus, contre des épaulements formés sur la périphérie interne du tiroir 54. Le piston 102 est donc initialement libre de se déplacer entre ces deux têtes.

Dans ce mode de réalisation, dans lequel le piston peut occuper deux positions distinctes de communication en étant déplacé à l'encontre de premiers et de deuxièmes moyens de rappel de piston, on choisit avantageusement que lesdits premier et deuxième moyens de rappel soient tarés pour des pressions différentes. Ainsi, les premier et deuxième seuils de pression précités sont différents.

Dans l'exemple représenté sur les figures 2 et 3, la restriction formée par les passages 98 occupe une seule zone axiale du tiroir 54. On pourrait toutefois choisir que la valve d'échange comprenne une première restriction apte à être interposée entre son entrée et sa sortie lorsque ladite entrée est reliée à la première conduite principale et une deuxième restriction apte à être interposée entre son entrée et sa sortie lorsque ladite entrée est reliée à la deuxième conduite principale.

Ainsi, en variante du mode de réalisation représenté sur les figures 2 et 3, on peut prévoir que ces première et deuxième restrictions soient formées par au moins deux perçages calibrés situés dans deux zones axiales différentes du tiroir, de manière à ce qu'elles soient simultanément obturées par le piston dans la position neutre de ce dernier et à ce que seule l'une ou l'autre d'entre elles soit obturée dans la première, respectivement dans la deuxième position du piston.

La première restriction formée par au moins le premier passage calibré serait apte à faire communiquer la première voie d'entrée et la voie de sortie, tandis que la deuxième restriction formée par le deuxième passage serait apte à faire communiquer la deuxième voie d'entrée avec la voie de sortie.

Dans le mode de réalisation des figures 2 et 3, les chambres de commande du déplacement du tiroir 84 et 86 sont ménagées de part et d'autre de ce dernier et, considéré dans une direction de déplacement du tiroir (en l'espèce dans le sens F1), le corps de valve 52 présente successivement la première voie d'entrée 56, la voie de sortie 60 et la deuxième voie d'entrée 58.

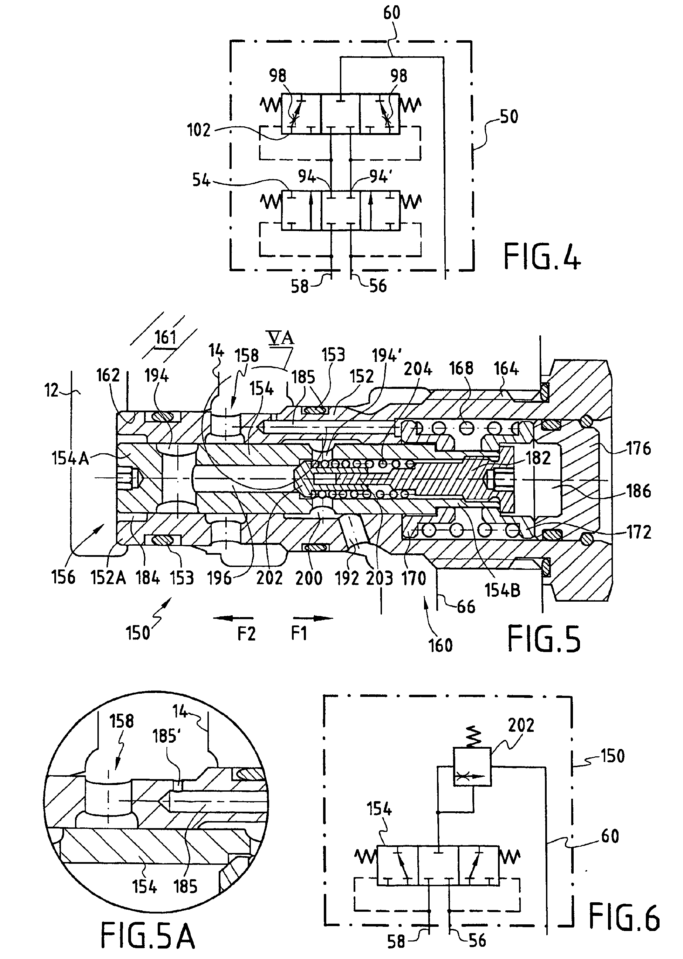

La figure 5 montre un deuxième mode de réalisation qui se distingue notamment du premier en ce que la deuxième voie d'entrée est située entre la première voie d'entrée et la voie de sortie. Le corps de valve 152 est en effet disposé dans un logement 162, qui est ménagé dans une pièce 161 telle qu'une partie de carter d'un moteur hydraulique et dans lequel débouchent successivement la première conduite principale 12, la deuxième conduite principale 14 et la conduite 66. Le corps de valve est fixé dans son logement 162, par exemple par un filetage 164. Un tiroir 154 est mobile à l'intérieur de ce corps de valve entre une position neutre et deux positions extrêmes qui définissent ses deux positions d'échange. Une première chambre de commande 184, raccordée en permanence à la voie d'entrée 156 de la valve, elle-même reliée à la conduite 12, permet, lorsqu'elle est alimentée en fluide sous pression, de solliciter le déplacement du tiroir dans le sens F1, à l'encontre de moyens de rappel constitués par un ressort 168. Cette chambre 184 se trouve du côté de l'extrémité 154A du tiroir situé à l'extrémité 152A du corps de valve à laquelle se trouve la première voie d'entrée 156. Du côté de l'autre extrémité 154B du tiroir se trouve une deuxième chambre de commande 186 qui communique en permanence avec la deuxième voie d'entrée 158 de la valve 150, par un canal de commande 185 qui est ménagé dans le corps de valve 152. On peut ainsi alimenter en fluide les deux chambres 184 et 186 qui se trouvent aux deux extrémités du tiroir, respectivement par la première conduite principale 12 et par la deuxième conduite principale 14, malgré le fait que la deuxième voie d'entrée 158 ne se trouve pas à l'extrémité du corps de valve. Le ressort de rappel 168 coopère avec des coupelles, respectivement 170 et 172 et se comporte comme le ressort 68 des figures 2 et 3.

Sur la figure 5, le canal 185 n'établit pas de perte de charge notable entre la voie d'entrée 158 et la chambre 186. En variante, comme le montre le détail de la figure 5A, une restriction calibrée 185' est disposée dans le canal 185 pour freiner le déplacement du tiroir 154 de façon à éviter les instabilités éventuelles de ce tiroir.

Sur la figure 5, le tiroir 154 est représenté dans sa position neutre. Lorsque la pression dans la première chambre de commande 184 est suffisante, il se déplace vers la droite, dans le sens F1, jusqu'à ce que la coupelle 170 entraînée par ce tiroir vienne en butée contre la coupelle 172, elle-même retenue en butée contre le bouchon 176. Dans cette première position d'échange, un conduit de communication 196 qui est formé dans le tiroir peut être mis en communication avec la deuxième voie d'entrée 158 de la valve par un ou plusieurs perçages 194 s'ouvrant sur la périphérie axiale du tiroir.

Comme celle des figures 2 et 3, la valve 150 de la figure 5 présente des moyens pour obturer des moyens de communication tant que la pression à la voie d'entrée qui est à la plus basse pression n'a pas atteint un seuil de pression. Par son extrémité opposée aux perçages 194, le conduit 196 s'ouvre sur la périphérie externe du tiroir par un ou plusieurs perçages 194' qui s'ouvrent eux-mêmes dans un espace annulaire 200, qui est ménagé entre la périphérie externe du tiroir 154 et la périphérie interne du corps 152 et qui communique avec la voie de sortie 160 de la valve 150, par l'intermédiaire d'un ou plusieurs perçages 192 pratiqués dans le corps de valve 152. Tant que la pression dans le conduit 196 n'est pas suffisante, la communication entre le conduit 196 et le ou les perçages 194' est empêchée par un organe d'obturation constitué par un pointeau mobile 202. En effet, ce pointeau, qui est mobile en coulissement sur une tige de guidage 203, est rappelé en permanence par un ressort de rappel 204 dans sa position d'obturation dans laquelle il coopère avec l'extrémité du conduit 196 opposée aux perçages 194. Lorsque la pression dans le conduit 196 est suffisante pour exercer sur la tête du pointeau 202 des contraintes supérieures à celles qu'exerce le ressort 204 sur ledit pointeau, alors ce pointeau peut se déplacer vers la droite, dans le sens F1, pour permettre la communication entre le conduit 196 et les perçages 194'.

La tige de guidage 203 est formée à l'extrémité libre d'un bouchon 182 qui est fixé à l'extrémité 154B du tiroir, par exemple par vissage.

Lorsque c'est la conduite 14 qui est à la haute pression, et que la pression dans la chambre 156 est suffisante pour déplacer le tiroir dans le sens F2, vers la gauche sur la figure 5, le tiroir peut venir occuper sa deuxième position d'échange, dans laquelle la coupelle 172 entraînée par ce tiroir vient en butée contre la coupelle 170. Dans ce cas, les perçages 194 précédemment évoqués communiquent avec la première voie d'entrée 156. Le conduit de communication 196 est donc également alimenté par la même voie d'entrée, mais le pointeau 202 ne permet le prélèvement de fluide, c'est-à-dire son évacuation vers la voie de sortie 160 que lorsque la pression dans le conduit de communication 196 est suffisante pour vaincre l'effort résistant exercé par le ressort 204. Ainsi, dans le mode de réalisation de la figure 5, le pointeau 202 rappelé par le ressort 204 constitue, avec les perçages 194', la soupape de la valve d'échange. Avantageusement, dans ce mode de réalisation, les moyens de communication obturés ou libérés selon la position du pointeau comportent une restriction. Cette restriction est par exemple formée par la section de passage entre le pointeau 202 et son siège, section qui devient maximale lorsque le pointeau arrive en butée sur le bouchon 182. La course du pointeau définit donc la valeur de la restriction. Il est possible aussi de former la restriction dans le canal 196. Le pointeau 202 constitue un piston pour lequel le conduit 196 constitue une chambre de commande.

Dans les deux modes de réalisation qui viennent d'être décrits, la pièce 61, respectivement 161 dans laquelle est pratiqué le logement 62, respectivement 162, pour le corps de valve est avantageusement constituée par le carter ou une partie de carter du moteur hydraulique. Dans ce logement débouchent les deux conduits principaux respectivement reliés aux deux conduits principaux 12, 14 et un conduit d'évacuation 66 relié à l'espace intérieur du carter. Le corps de valve, 52 ou 152 forme une pièce apte à être mise en place dans ce logement de telle sorte que ses deux voies d'entrée 56, 58 ou 156, 158 et sa voie de sortie 60 ou 160 communiquent respectivement avec les deux conduits principaux et avec le conduit d'évacuation. Le dispositif comporte des moyens d'étanchéité (joints 53 ou 153) qui sont aptes à coopérer avec le corps de valve et avec le carter pour empêcher une communication entre ces conduits principaux et ce conduit d'évacuation à l'intérieur du logement autrement que par les voies d'entrée et de sortie du corps de valve.

La figure 4 schématise la valve d'échange 50, le tiroir 54 formant un élément de valve à trois positions, une position neutre intermédiaire et deux positions extrêmes d'échange, dont les entrées sont constituées par les voies d'entrée 56 et 58. La sortie de cet élément de valve communique avec l'entrée d'un autre élément de valve constitué par le piston 102, également à trois positions : une position neutre dans laquelle il empêche la communication entre les voies d'entrée 56 et 58 et la voie de sortie 60, et deux positions extrêmes, dans lesquelles il autorise la communication entre l'une des voies d'entrée et la voie de sortie.

Ces deux éléments de valve sont rassemblés dans une seule valve commune formant la valve d'échange 50.

La figure 6 schématise le mode de réalisation de la figure 5. Le tiroir 154 forme un élément de valve à trois positions, une position neutre intermédiaire et deux positions extrêmes d'échange. La sortie de cet élément de valve n'est reliée à la voie de sortie 60 que lorsque la pression à ladite sortie est suffisante pour permettre l'ouverture de la soupape constituée par le pointeau 202.

Cette soupape 202 et l'élément de valve 150 sont rassemblés en une seule valve d'échange 150.

## Revendications

1. Dispositif d'échange pour un circuit fermé comprenant au moins un moteur hydraulique (16) ayant un carter qui définit un espace intérieur dans lequel est disposé un bloc-cylindres, et au moins deux conduites principales (12, 14), qui sont reliées à la pompe (10) et qui constituent respectivement une conduite principale d'alimentation et une conduite principale d'échappement pour le moteur, le dispositif d'échange comprenant un sélecteur d'échange (54 ; 154) apte à mettre la conduite principale qui est à la plus basse pression en communication avec une soupape (98, 102, 104, 106 ; 194', 202, 204) qui, elle-même, communique avec un réservoir sans pression (22),
**caractérisé en ce que** le sélecteur d'échange (54 ; 154) et la soupape (98, 102, 104, 106 ; 194', 202, 204) sont réunis dans une même valve d'échange (50 ; 150) ayant une entrée (56, 58 ; 156, 158) apte à être reliée à la conduite principale (12, 14) qui est à la plus basse pression et une sortie (60 ; 160) qui communique en permanence avec le réservoir sans pression (22), la soupape étant apte à faire communiquer ladite entrée avec ladite sortie lorsque la pression dans ladite conduite principale qui est à la plus basse pression atteint un seuil de pression donné.

2. Dispositif selon la revendication 1, **caractérisé en ce que** la valve d'échange (50 ; 150) comprend, en outre, une restriction (98 ; 196, 202) apte à être interposée entre l'entrée (56, 58 ; 156, 158) et la sortie (60 ; 160) de ladite valve, lorsque celles-ci sont reliées par la soupape.

3. Dispositif selon la revendication 1 ou 2, **caractérisé en ce que** la sortie (60 ; 160) de la valve d'échange (50 ; 150) est raccordée au réservoir sans pression (22) par l'intermédiaire de l'espace intérieur du moteur (16).

4. Dispositif selon l'une quelconque des revendications 1 à 3, **caractérisé en ce que** la valve d'échange (50 ; 150) comprend un corps de valve (52 ; 152) et un tiroir d'échange (54 ; 154), le corps de valve ayant deux voies d'entrée (56, 58 ; 156, 158) respectivement raccordées en permanence à chacune des deux conduites principales (12, 14) et une voie de sortie (60 ; 160) qui communique avec le réservoir sans pression (22), le tiroir d'échange étant monté coulissant dans le corps de valve en étant commandé par la pression de fluide auxdites voies d'entrée (56, 58 ; 156, 158) à l'encontre de moyens de rappel (68 ; 168) du tiroir entre une position neutre dans laquelle il isole ces voies d'entrée et de sortie, et deux positions d'échange dans lesquelles la première ou la deuxième voie d'entrée (56, 58 ; 156, 158), celle qui est reliée à la conduite principale (12, 14) à la plus basse pression, est apte à communiquer avec la voie de sortie (60 ; 160) par des moyens de communication (88, 94, 94', 98, 92 ; 194, 196, 194', 192) , et **en ce que** ladite valve d'échange (50; 150) comporte, en outre, des moyens (102, 104 ; 202, 204) pour, dans les positions d'échange, obturer lesdits moyens de communication tant que la pression de fluide à la voie d'entrée qui est reliée à la conduite principale à la plus basse pression n'a pas atteint un seuil de pression donné.

5. Dispositif selon la revendication 4, **caractérisé en ce qu'**une première et une deuxième chambre de commande (84, 86) communiquant en permanence avec, respectivement, la première et la deuxième voie d'entrée (56, 58) du corps de valve (52) sont ménagées de part et d'autre du tiroir d'échange (54) et **en ce que**, considéré dans une direction (F1) de déplacement du tiroir, le corps de valve (52) présente successivement la première voie d'entrée (56), la voie de sortie (60) et la deuxième voie d'entrée (58).

6. Dispositif selon la revendication 4, **caractérisé en ce qu'**une première et une deuxième chambre de commande (184, 186) communiquant en permanence avec, respectivement, la première et la deuxième voie d'entrée (154, 158) du corps de valve (152) sont ménagées de part et d'autre du tiroir d'échange (154), **en ce que**, considéré dans une direction (F1) de déplacement du tiroir, le corps de valve présente successivement la première voie d'entrée (156), la deuxième voie d'entrée (158) et la voie de sortie (160), et **en ce que** la première chambre de commande (184) est située du côté de la première voie d'entrée (156), tandis que la deuxième chambre de commande (186) est située du côté opposé et communique avec la deuxième voie d'entrée (158) par un canal de commande (185) ménagé dans le corps de valve (154).

7. Dispositif selon la revendication 3 et l'une quelconque des revendications 4 à 6, **caractérisé en ce que** le carter du moteur (16) présente un logement (62 ; 162) dans lequel débouchent deux conduits principaux respectivement reliés aux deux conduites principales (12, 14) et un conduit d'évacuation (66) relié à l'espace intérieur dudit carter, **en ce que** le corps de valve (52 ; 152) forme une pièce apte à être mise en place dans ledit logement de telle sorte que ses deux voies d'entrée (56, 58 ; 156, 158) et sa voie de sortie (60 ; 160) communiquent respectivement avec les deux conduits principaux et le conduit d'évacuation et **en ce qu'**il comporte des moyens d'étanchéité (53 ; 153) aptes à coopérer avec le corps de valve et avec ledit logement du carter pour empêcher une communication entre lesdits conduits principaux et le conduit d'évacuation à l'intérieur dudit logement, autrement que par les voies d'entrée et de sortie du corps de valve.

8. Dispositif selon l'une quelconque des revendications 4 à 7, **caractérisé en ce que** le tiroir (54 ; 154) coopère avec un piston (102 ; 202) mobile par rapport au tiroir entre une position neutre dans laquelle il obture lesdits moyens de communication (88, 94, 94', 98, 92 ; 194, 196, 194', 192) et au moins une position de communication dans laquelle il ouvre lesdits moyens de communication, ce piston étant apte à être commandé entre lesdites positions par des moyens de commande comprenant une chambre de commande de piston (96A, 96B ; 196) qui, lorsque le tiroir (54 ; 154) est dans une position d'échange, est reliée à la conduite principale (12, 14) à la plus basse pression.

9. Dispositif selon l'une quelconque des revendications 1 à 8, **caractérisé en ce que** la soupape (102, 104, 106) présente un premier seuil de pression à partir duquel ladite soupape fait communiquer l'entrée (56) et la sortie (60) de la valve d'échange (50) lorsque ladite entrée est reliée à la première conduite principale (12) et un deuxième seuil de pression, différent du premier, à partir duquel ladite soupape fait communiquer l'entrée (58) et la sortie (60) de la valve d'échange lorsque ladite entrée est reliée à la deuxième conduite principale (14).

10. Dispositif selon les revendications 8 et 9, **caractérisé en ce que** le piston (102) est apte à occuper une première et une deuxième position de communication dans lesquelles il est respectivement commandé par alimentation en fluide d'une première chambre de commande de piston (96A) à l'encontre de premiers moyens de rappel de piston (104) et par alimentation en fluide d'une deuxième chambre de commande de piston (96B) à l'encontre de deuxièmes moyens de rappel de piston (106) et **en ce que** lesdits premiers et deuxièmes moyens de rappel de piston (104, 106) sont tarés pour des pressions différentes.

11. Dispositif selon la revendication 4 et l'une quelconque des revendications 1 à 10, **caractérisé en ce que** les moyens de communication comprennent un passage calibré (98).

12. Dispositif selon l'une quelconque des revendications 1 à 11, **caractérisé en ce que** la valve d'échange (50) comprend une première restriction (98) apte à être interposée entre l'entrée (56, 58) et la sortie (60) de la valve lorsque ladite entrée est reliée à la première conduite principale (12) et une deuxième restriction apte à être interposée entre l'entrée (56, 58) et la sortie (60) de la valve lorsque ladite entrée est reliée à la deuxième conduite principale (14).

13. Dispositif selon les revendications 11 et 12, **caractérisé en ce que** les moyens de communication (88, 94, 94', 98, 92) comprennent un premier passage calibré apte à faire communiquer la première voie d'entrée avec la voie de sortie et un deuxième passage calibré apte à faire communiquer la deuxième voie d'entrée avec la voie de sortie.

## Claims

1. A replenishing device for a closed circuit comprising: at least one hydraulic motor (16) having a casing which defines an internal space in which a cylinder block is disposed; and at least two main pipes (12, 14) which are connected to the pump (10) and which constitute respectively a feed main pipe and a discharge main pipe for the motor, the replenishing device comprising a replenishing selector (54; 154) suitable for putting the main pipe that is at the lower pressure in communication with a valve (98, 102, 104, 106; 194', 202, 204) which itself communicates with a pressure-free reservoir (22);
**characterized in that** the replenishing selector (54; 154) and the valve (98, 102, 104, 106; 194', 202, 204) are united in the same replenishing valve unit (50; 150) having an inlet (56, 58; 156, 158) suitable for being connected to the main pipe (12, 14) that is at the lower pressure, and an outlet (60; 160) which communicates continuously with the pressure-free reservoir (22), the valve being suitable for causing said inlet to communicate with said outlet when the pressure in said main pipe that is at the lower pressure reaches a given pressure threshold.

2. A device according to claim 1, **characterized in that** the replenishing valve unit (50; 150) further has a constriction (98; 196, 202) suitable for being interposed between the inlet (56, 58; 156, 158) and the outlet (60; 160) of said valve unit, when said inlet and said outlet are connected together via the valve.

3. A device according to claim 1 or 2, **characterized in that** the outlet (60, 160) of the replenishing valve unit (50; 150) is connected to the pressure-free reservoir (22) via the internal space of the motor (16).

4. A device according to any one of claims 1 to 3, **characterized in that** the replenishing valve unit (50; 150) comprises a valve body (52; 152) and a replenishing slide (54, 154), the valve body having two inlet ports (56, 58; 156, 158) respectively connected continuously to respective ones of the two main pipes (12, 14) and an outlet port (60; 160) that communicates with the pressure-free reservoir (22), the replenishing slide being mounted to slide in the valve body by being controlled by the fluid pressure at said inlet ports (56, 58, 156, 158) acting against return means (68; 168) for returning the slide, so that said slide is caused to move between a neutral position in which it isolates the inlet and outlet ports, and two replenishing positions in which that one of the first and second inlet ports (56, 58; 156, 158) which is connected to the main pipe (12, 14) at the lower pressure is capable of communicating with the outlet port (60; 160) via communication means (88, 94, 94', 98, 92; 194, 196, 194', 192), and **in that** said replenishing valve unit (50; 150) further has means (102, 104; 202, 204) acting, when the slide is in the replenishing positions, to close off said communication means so long as the fluid pressure at the inlet port that is connected to the main pipe at the lower pressure has not reached a given pressure threshold.

5. A device according to claim 4, **characterized in that** a first and second control chamber (84, 86) communicating continuously respectively with the first and the second inlet ports (56, 58) of the valve body (52) are provided at respective ends of the replenishing slide (54), and **in that**, as considered in a direction (F1) in which the slide is displaced, the valve body (52) successively presents the first inlet port (56), the outlet port (60), and the second inlet port (58).

6. A device according to claim 4, **characterized in that** first and second control chambers (184, 186) communicating continuously respectively with the first and the second inlet port (154, 158) of the valve body (152) are provided at respective ends of the replenishing slide (154), **in that**, as considered in a direction (F1) in which the slide is displaced, the valve body successively presents the first inlet port (156), the second inlet port (158) and the outlet port (160), and **in that** the first control chamber (184) is situated at the end closer to the first inlet port (156), while the second control chamber (186) is situated at the opposite end and it communicates with the second inlet port (158) via a control channel (185) provided in the valve body (154).

7. A device according to claim 3, and to any one of claims 4 to 6, **characterized in that** the casing of the motor (16) is provided with a recess (62; 162) in which two main ducts connected to respective ones of the two main pipes (12, 14) and a removal duct (66) connected to the internal space of said casing open out, **in that** the valve body (52; 152) forms a part suitable for being put in place in said recess such that its two inlet ports (56, 58; 156, 158) and its outlet port (60; 160) communicate respectively with the two main ducts and with the removal duct, and **in that** it includes sealing means (53; 153) suitable for co-operating with the valve body and with said recess in the casing to prevent any communication between said main ducts and the removal duct inside said recess otherwise than via the inlet and the outlet ports of the valve body.

8. A device according to any one of claims 4 to 7, **characterized in that** the slide (54; 154) co-operates with a piston (102; 202) mounted to move relative to the slide between a neutral position in which it closes off said communication means (88, 94, 94', 98, 92; 194, 196, 194', 192) and at least one communication position in which it opens said communication means, said piston being suitable for being controlled to move between said positions by control means comprising a piston control chamber (96A, 96B; 196) which, when the slide (54; 154) is in a replenishing position, is connected to the main pipe (12, 14) at the lower pressure.

9. A device according to any one of claims 1 to 8, **characterized in that** the valve (102, 104, 106) has a first pressure threshold as from which said valve causing the inlet (56) and the outlet (60) of the replenishing valve unit (50) to communicate when said inlet is connected to the first main pipe (12) and a second pressure threshold different from the first pressure threshold, and as from which said valve causes the inlet (58) and the outlet (60) of the replenishing valve unit to communicate when said inlet is connected to said second main pipe (14).

10. A device according to claims 8 and 9, **characterized in that** the piston (102) is suitable for occupying a first and a second communication positions, into which it is caused to go respectively by feeding a first piston control chamber (96A) with fluid against first piston return means (104) and by feeding a second piston control chamber (96B) with fluid against second piston return means (106), and **in that** said first and second piston return means (104, 106) are calibrated for different pressures.

11. A device according to claim 4, and to any one of claims 1 to 10, **characterized in that** the communication means comprise a calibrated passageway (98).

12. A device according to any one of claims 1 to 11, **characterized in that** the replenishing valve unit (50) has a first constriction (98) suitable for being interposed between the inlet (56, 58) and the outlet (60) of the valve unit when said inlet is connected to the first main pipe (12), and a second constriction suitable for being interposed between the inlet (56, 58) and the outlet (60) of the valve unit when said inlet is connected to the second main pipe (14).

13. A device according to claims 11 and 12, **characterized in that** the communication means (88, 94, 94', 98, 92) comprise a first calibrated passageway suitable for causing the first inlet port to communicate with the outlet port, and a second calibrated passageway suitable for causing the second inlet port to communicate with the outlet port.

## Patentansprüche

1. Wechselvorrichtung für einen geschlossenen Kreis umfassend wenigstens einen Hydraulikmotor (16), der ein Gehäuse hat, das einen Innenraum definiert, in dem ein Zylinderblock angeordnet ist, sowie wenigstens zwei Hauptleitungen (12, 14), die mit der Pumpe (10) verbunden sind und die eine Hauptzuführleitung bzw. eine Hauptaustrittsleitung für den Motor bilden, wobei die Wechselvorrichtung einen Wechselwähler (54; 154) umfaßt, der geeignet ist, die Hauptleitung, an welcher der niedrigste Druck anliegt, mit einem Ventil (98, 102, 104, 106; 194', 202, 204) zu verbinden, das seinerseits mit einem drucklosen Behälter (22) in Verbindung steht,
**dadurch gekennzeichnet, daß** der Wechselwähler (54; 154) und das Ventil (98, 102, 104, 106; 194', 202, 204) in einem gleichen Wechselventil (50; 150) vereint sind, das einen Eingang (56, 58; 156, 158), der geeignet ist, mit der Hauptleitung (12, 14) verbunden zu werden, an welcher der niedrigste Druck anliegt, sowie einen Ausgang (60; 160) aufweist, der ständig mit dem drucklosen Behälter (22) in Verbindung steht, wobei das Ventil geeignet ist, den Eingang mit dem Ausgang zu verbinden, wenn der Druck in der Hauptleitung, an welcher der niedrigste Druck anliegt, eine vorgegebene Druckschwelle erreicht.

2. Vorrichtung nach Anspruch 1, **dadurch gekennzeichnet, daß** das Wechselventil (50; 150) ferner eine Einschnürung (98; 196, 202) aufweist, die geeignet ist, zwischen dem Eingang (56, 58; 156, 158) und dem Ausgang (60; 160) des Ventils angeordnet zu werden, wenn diese durch das Ventil verbunden sind.

3. Vorrichtung nach Anspruch 1 oder 2, **dadurch gekennzeichnet, daß** der Ausgang (60; 160) des Wechselventils (50; 150) über den Innenraum des Motors (16) mit dem drucklosen Behälter (22) verbunden ist.

4. Vorrichtung nach einem der Ansprüche 1 bis 3, **dadurch gekennzeichnet, daß** das Wechselventil (50; 150) einen Ventilkörper (52; 152) sowie einen Wechselschieber (54; 154) umfaßt, wobei der Ventilkörper zwei Einlaßwege (56, 58; 156, 158) aufweist, die jeweils ständig mit den beiden Hauptleitungen (12 bzw. 14) verbunden sind, sowie einen Auslaßweg (60; 160) hat, der mit dem drucklosen Behälter (22) in Verbindung steht, wobei der Wechselschieber - durch den Fluiddruck an den Einlaßwegen (56, 58; 156, 158), entgegen von Mitteln (68; 168) zum Rückstellen des Schiebers gesteuert - in dem Ventilkörper verschieblich angebracht ist, und zwar zwischen einer neutralen Position, in der er diese Einlaß- und Auslaßwege trennt, und zwei Wechselpositionen, in denen der erste oder der zweite Einlaßweg (56, 58; 156, 158), derjenige, der mit der Hauptleitung (12, 14) verbunden ist, an welcher der niedrigste Druck anliegt, geeignet ist, über Verbindungsmittel (88, 94, 94', 98, 92; 194, 196, 194', 192) mit dem Auslaßweg (60; 160) verbunden zu werden, und daß das Wechselventil (50; 150) ferner Mittel (102, 104; 202, 204) umfaßt, um - in den Wechselpositionen - die Verbindungsmittel solange zu verschließen, wie der Fluiddruck an dem Einlaßweg, der mit der Hauptleitung verbunden ist, an welcher der niedrigste Druck anliegt, eine vorgegebene Druckschwelle nicht erreicht hat.

5. Vorrichtung nach Anspruch 4, **dadurch gekennzeichnet, daß** eine erste und eine zweite Steuerkammer (84, 86), die ständig mit dem ersten bzw. dem zweiten Einlaßweg (56, 58) des Ventilkörpers (52) in Verbindung stehen, auf beiden Seiten des Wechselschiebers (54) ausgebildet sind, und daß - in einer Bewegungsrichtung (F1) des Schiebers betrachtet - der Ventilkörper (52) nacheinander den ersten Einlaßweg (56), den Auslaßweg (60) und den zweiten Einlaßweg (58) aufweist.

6. Vorrichtung nach Anspruch 4, **dadurch gekennzeichnet, daß** eine erste und eine zweite Steuerkammer (184, 186), die ständig mit dem ersten bzw. dem zweiten Einlaßweg (154, 158) des Ventilskörpers (152) in Verbindung stehen, auf beiden Seiten des Wechselschiebers (154) ausgebildet sind, daß - in einer Bewegungsrichtung (F1) des Schiebers betrachtet - der Ventilkörper nacheinander den ersten Einlaßweg (156), den zweiten Einlaßweg (158) und den Auslaßweg (160) aufweist, und daß die erste Steuerkammer (184) auf der Seite des ersten Einlaßweges (156) gelegen ist, während die zweite Steuerkammer (186) auf der gegenüberliegenden Seite gelegen ist und mit dem zweiten Einlaßweg (158) über einen in dem Ventilkörper (154) ausgebildeten Steuerkanal (185) verbunden ist.

7. Vorrichtung nach Anspruch 3 und einem der Ansprüche 4 bis 6, **dadurch gekennzeichnet, daß** das Gehäuse des Motors (16) eine Aufnahme (62; 162) aufweist, in die zwei, mit den beiden Hauptleitungen (12 bzw. 14) verbundene Hauptleitungen, sowie eine mit dem Innenraum des Gehäuses verbundene Auslaßleitung (66) münden, daß der Ventilkörper (52; 152) ein Teil bildet, das geeignet ist, in die Aufnahme derart eingesetzt zu werden, daß seine zwei Einlaßwege (56, 58; 156, 158) und sein Auslaßweg (60; 160) mit den beiden Hauptleitungen bzw. der Auslaßleitung verbunden sind, und daß sie Dichtungsmittel (53; 153) aufweist, die geeignet sind, mit dem Ventilkörper und mit der Aufnahme des Gehäuses zusammenzuwirken, um eine Verbindung zwischen den Hauptleitungen und der Auslaßleitung innerhalb der Aufnahme, anders als über die Einlaß- und Auslaßwege des Ventilkörpers, zu verhindern.

8. Vorrichtung nach einem der Ansprüche 4 bis 7, **dadurch gekennzeichnet, daß** der Schieber (54; 154) mit einem Kolben (102; 202) zusammenwirkt, der gegenüber dem Schieber zwischen einer neutralen Position, in der er die Verbindungsmittel (88, 94, 94', 98, 92; 194, 196, 194', 192) verschließt, und wenigstens einer Verbindungsposition, in der er die Verbindungsmittel öffnet, beweglich ist, wobei dieser Kolben geeignet ist, zwischen den genannten Positionen durch Steuermittel gesteuert zu werden, die eine Kolbensteuerkammer (96A, 96B; 196) umfassen, die dann, wenn der Schieber (54; 154) sich in einer Wechselstellung befindet, mit der Hauptleitung (12, 14), an welcher der niedrigste Druck anliegt, verbunden ist.

9. Vorrichtung nach einem der Ansprüche 1 bis 8, **dadurch gekennzeichnet, daß** das Ventil (102, 104, 106) eine erste Druckschwelle aufweist, ab der das Ventil den Eingang (56) und den Ausgang (60) des Wechselventils (50) verbindet, wenn der Eingang mit der ersten Hauptleitung (12) verbunden ist, sowie eine zweite, von der ersten abweichende Druckschwelle, ab der das Ventil den Eingang (58) und den Ausgang (60) des Wechselventils verbindet, wenn der Eingang mit der zweiten Hauptleitung (14) verbunden ist.

10. Vorrichtung nach den Ansprüchen 8 und 9, **dadurch gekennzeichnet, daß** der Kolben (102) geeignet ist, eine erste und eine zweite Verbindungsposition einzunehmen, in denen er durch Fluidbeaufschlagung einer ersten Kolbensteuerkammer (96A) entgegen ersten Kolbenrückstellmitteln (104) bzw. durch Fluidbeaufschlagung einer zweiten Kolbensteuerkammer (96B) entgegen zweiten Kolbenrückstellmitteln (106) gesteuert wird, und daß die ersten und zweiten Kolbenrückstellmittel (104, 106) für unterschiedliche Drücke eingestellt sind.

11. Vorrichtung nach Anspruch 4 und einem der Ansprüche 1 bis 10, **dadurch gekennzeichnet, daß** die Verbindungsmittel einen kalibrierten Durchgang (98) aufweisen.

12. Vorrichtung nach einem der Ansprüche 1 bis 11, **dadurch gekennzeichnet, daß** das Wechselventil (50) eine erste Einschnürung (98) aufweist, die geeignet ist, zwischen dem Eingang (56, 58) und dem Ausgang (60) des Ventils angeordnet zu werden, wenn der Eingang mit der ersten Hauptleitung (12) verbunden ist, sowie eine zweite Einschnürung, die geeignet ist, zwischen dem Eingang (56, 58) und dem Ausgang (60) des Ventils angeordnet zu werden, wenn der Eingang mit der zweiten Hauptleitung (14) verbunden ist.

13. Vorrichtung nach den Ansprüchen 11 und 12, **dadurch gekennzeichnet, daß** die Verbindungsmittel (88, 94, 94', 98, 92) einen ersten kalibrierten Durchgang aufweisen, der geeignet ist, den ersten Einlaßweg mit dem Auslaßweg zu verbinden, sowie einen zweiten kalibrierten Durchgang, welcher geeignet ist, den zweiten Einlaßweg mit dem Auslaßweg zu verbinden.
